# EUROPEAN PATENT APPLICATION

(11) **EP 2 991 136 A1**
(43) Date of publication of application: **02.03.2016**
(21) Application number: 14306341.0
(22) Date of filing: 29.08.2014
(51) Int. Cl.: H01M 4/04, H01M 4/36, H01M 4/38, H01M 4/86, H01M 4/88, H01M 4/90, C25D 5/12, H01M 4/92

(54) **Method for manufacturing a miniaturized electrochemical cell**

(71) Applicant: Centre National de la Recherche Scientifique, 75016 Paris (FR); Université de Bordeaux, 33000 Bordeaux (FR); Institut Polytechnique de Bordeaux, 33402 Talence Cedex (FR)
(72) Inventor: Mano, Nicolas, 33400 Talence (FR); Kuhn, Alexander, 33420 Guillac (FR); Ravaine, Serge, 33610 Cestas (FR); Heim, Matthias, Oxford OX4 3EN (GB); Reculusa, Stéphane, 33600 Pessac (FR)
(74) Representative: Gevers & Orès

(57) **Abstract**

The invention relates to a method for manufacturing a miniaturized electrochemical cell.

The method of the invention consisting of porous electrodes and comprises the following steps: a) formation of a colloidal template (10) of colloidal particles (3, 30, 300, 3 000, 30 000) made of an electrically insulating material, on a substrate (S2) made of an electrically conducting material, b) depositing by electrodeposition in the void spaces (4, 5, 6), of the colloidal template, at least three alternating layers (4', 6', 5', 50') forming a repeating unit, these three alternating layers (4', 6', 5', 50') being made of an electron conducting material or of a semi-conducting material, the intermediate layer(s) (6') being made of a material M₃ different from the materials M₁ and M₂ constituting respectively the upper and lower layers (4', 5') and being the materials wanted for the electrodes, the material M₃ having a standard potential lower than the standard potentials of the materials M₁ and M₂, c) removal of the material M₃ of intermediate layer(s) (6'), and d) removal of the colloidal particles (3, 300) of the upper and lower layers (4', 5', 50') thereby obtaining the desired electrodes (4", 5", 50").

The invention can be used in particular in the electrochemical field.

## Description

The invention relates to a method for manufacturing a miniaturized electrochemical cell.

In miniaturized electrochemical systems the overall dimensions of a device depend on the size of the single components. For example, in batteries, generally a steel case is used to prevent corrosive or toxic components, such as electrolyte, etc... from leaking, dominating the size and limiting efficient miniaturisation of the device. Another example are implantable biofuel cells, which may deliver the electrical power for small medical devices (e.g. glucose sensors) permanently remaining in the body. The subcutaneous interstitial fluid here serves as the electrolyte and thus no case is required. But in order to drive the electrochemical reaction, at least two independent electrodes, serving as the anode and the cathode, still need to be available. The integration of independently addressable electrodes in a single device would offer great potential for a further miniaturization of electrochemical cells, especially in fuel cells or batteries.

The invention addresses this need by using a colloidal template for manufacturing miniaturized electrochemical cells consisting only of electrodes with a high active surface area, *i*.*e*. macroporous electrodes.

In the invention, the followings terms have the following meanings:
- "colloidal template" means a stack of colloidal particles which are made of an electrically insulating material,
- "colloidal particles" designates particles having their largest dimension comprised between 20 to 2 000 nm, preferably of from 100 to 1 200 nm,
- "spherical particles" means particles having in all points the same diameter or having a difference between the largest diameter and the smallest diameter of less than 10%,
- "potentiostatic deposition" means an electrochemical deposition at a constant potential.

The process of manufacture of the invention will be described in reference to the annexed figures in which:
- figure 1 schematically shows a structure of a colloidal template used in the process of the invention,
- figure 2 schematically shows the structure of the colloidal template of figure 1 after three different alternating layers made of an electron conducting material have been deposited in the void spaces of the template,
- figure 3 schematically shows the structure of an electrochemical cell according to a first embodiment of the invention comprising two electrodes,
- figure 4 schematically shows an intermediate structure of an electrochemical cell according to a second embodiment of the invention in which supporting columns are created for maintaining the rigidity of the structure of the electrochemical cell which is obtained comprising two electrodes,
- figure 5 schematically shows the intermediate structure shown in figure 4 with the supporting elements,
- figure 6 schematically shows the final structure of an electrochemical cell according to the second embodiment of the process of the invention,
- figure 7 schematically shows the structure of the electrochemical cell according to the second embodiment of the invention with a connecting wire for addressing the electrodes,
- figure 8 schematically shows a final structure of an electrochemical cell according to the invention comprising three electrodes,
- figure 9 schematically shows the same structure as in figure 2 but in which the colloidal particles of the intermediate layer are made of a material different from the material of particles originally present in the upper and lower layers, according to a third embodiment of the invention,
- figure 10 schematically shows the structure shown in figure 9 in which the material filling the void spaces of the intermediate layer has been eliminated,
- figure 11 schematically shows the structure of figure 10 in which the colloidal particles in the upper and lower layer of particles have been eliminated, and constituting an electrochemical cell obtained in the third embodiment of the invention,
- figure 12 schematically shows the final structure of the electrochemical cell according to the third embodiment of the invention including a connecting wire for addressing the upper electrode,
- figure 13 schematically shows the same structure as in figure 2,
- figure 14 schematically shows the same structure as in figure 13, after the material of the intermediate layer has been eliminated,
- figure 15 schematically shows the same structure shown in figure 14 in which the void spaces left by the elimination of the material in the intermediate layer have been filled with a material different from the material originally deposited for forming the intermediate layer in the structure of figure 13,
- figure 16 schematically shows the final structure of the electrochemical cell obtained according to a fourth embodiment of the process of the invention,
- figure 17a shows a scanning electron microscopy (SEM) picture representing the structure obtained in example 2, with an intermediate layer of nickel, before etching away the nickel with a solution nitric acid (13%), and a lower and upper layer made out of gold
- figure 17b shows a SEM picture of the same structure as represented in figure 17a, but after 30 min of etching of the intermediate layer of nickel with a solution of nitric acid (13%)
- figure 17c shows a SEM picture of the same structure as represented in figure 17a, but after 19 hours of etching of the intermediate layer of nickel with a solution of nitric acid (13%)
- figure 18 shows three chronoamperometric curves obtained for the consecutive depositions of a lower gold layer, an intermediate nickel layer and an upper gold layer into the colloidal template of the comparative example,
- figure 19a shows a SEM image of the cross-section of the colloidal template of example 2 after infiltration with alternating layers of gold, nickel and gold,
- figure 19b shows a SEM image of a cross-section of the same electrode as shown in figure 19a after the removal of the silica template, resulting in a macroporous hybrid material,
- figure 20a shows a SEM image of the cross-section of a macroporous Au-Ni-Au structure before immersion in a sulfuric acid solution (24%),
- figure 20b shows a SEM image of the structure shown in figure 20a after 30 minutes in the Ni etching solution (sulfuric acid solution 24%),
- figure 20c shows a SEM image of the structure shown in figure 20a after 19 hours of immersion in the etching solution (sulfuric acid solution 24%).
- figure 20d shows a SEM image of the cross-section of the structure shown in Figure 20c but with a lower magnification, obtained in example 2 after formation of a lower layer made of gold in the void spaces of 3 half-layer of colloidal particles, of an intermediate layer made of nickel (6 layers of colloidal particles) and of an upper layer made of gold (5 layers of colloidal particles),
- figure 21 shows the cyclic voltammetry (CV) stripping curves of the macroporous gold electrodes deposited on a single support and separated by silica particles and/or air (gold electrodes obtained in example 2),
- figures 22a and 22b show cross-section images of a 250µm-gold wire as support with gold/nickel/gold layers (pore size 690nm) in a colloidal template, obtained in example 1,
- figure 23a-23b shows cross-section images of alternating macroporous Au-Ni-Au layers (10 layers of 690 nm-silica spheres) on a 250µm-gold wire support, after dissolution of the intermediate nickel layer and of the colloidal template obtained in example 1.

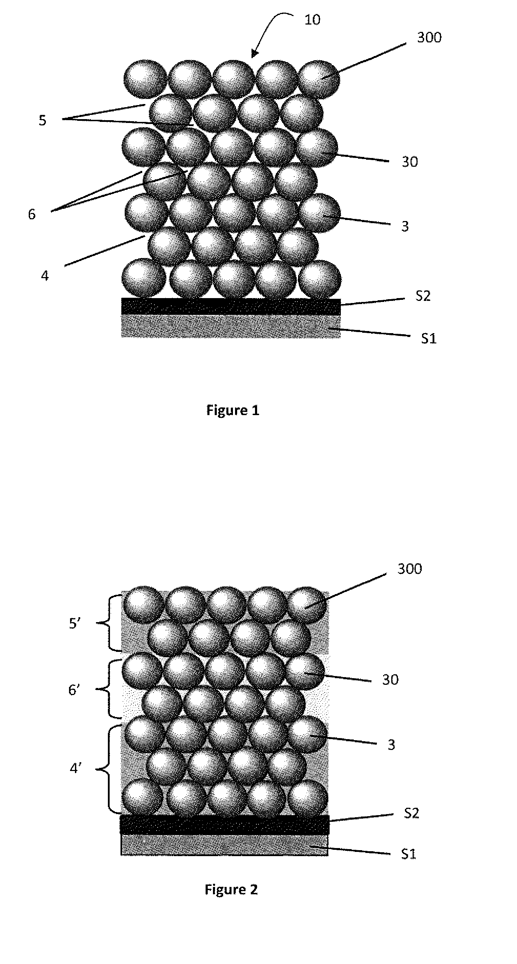

The simplest and first embodiment of the process of the invention is schematically illustrated in figures 1 to 3.

As shown in figure 1, the first step (step a)) of the process of the invention is a step of formation of a template, noted 10, which is formed on a surface of a substrate, noted S2.

The colloidal particles, noted 3, 30, 300, are made of an electrically insulating material. Such an electrically insulating material is preferably silica (SiO₂) or an electrically insulating polymer, preferably polystyrene.

Preferably, the colloidal particles are spherical particles having a diameter of from 20 to 2000 nm, preferably of from 100 to 1 200 nm.

The colloidal particles 3, 30, 300 can be made of the same electrically insulating material or of different electrically insulating materials.

The second step (step b)) of the first embodiment of the process of the invention is shown in figure 2.

In this step, three alternating layers, noted respectively 4', 5' and 6' are formed by filling the void spaces noted 4, 5, 6, of the template 10.

The materials M₁, M₂, M₃ deposited in the void spaces 4, 5, 6, of the colloidal template 10 for forming the layers 4', 5', 6', are, independently from each other, chosen among electron conducting materials or semi-conducting materials.

The material M₃ constituting the intermediate layer 6' must be different from the material M₁ and M₂ constituting the lower and upper layers 4', 5'.

Furthermore, the material M₃ must have a standard potential lower than the standard potentials of each of the materials M₁ and M₂.

The materials M₁ and M₂ can be the same material. But they can also be different materials.

Preferably, the materials M₁, M₂ and M₃ are, independently from each other, chosen among Pd, Ag, Cr, Au, Pt, Cu, Ni, Zn or an electron conducting polymer such as polypyrrole (PPy), polyaniline (PAni), polyacetylene, polythiophene, poly(3,4-ethylenedioxythiophene): sodium poly(styrene sulfonate) (PEDOT-PSS).

Preferably, the lower layer 4' and the upper layer 5' are made of gold and the intermediate layer 6' is made of nickel.

The substrate S2 must be made of an electrically conducting material. Preferably, it is gold or another material with sufficient conductivity such as noble metals or Indium Tin Oxide (ITO) or Fluorine-doped Tin Oxide (FTO).

Indeed, the three layers 4', 5' and 6' are preferably, in the invention, deposited by electrodeposition.

The thickness of the substrate S2 may vary between 100 nm and 1mm, so that in order to obtain the rigidity and mechanical strength of the stack of colloidal particles and layers, it is advantageous to place this substrate S2 on a rigid support, noted S1. This support can be made of any type of insulating or conducting material, for example glass.

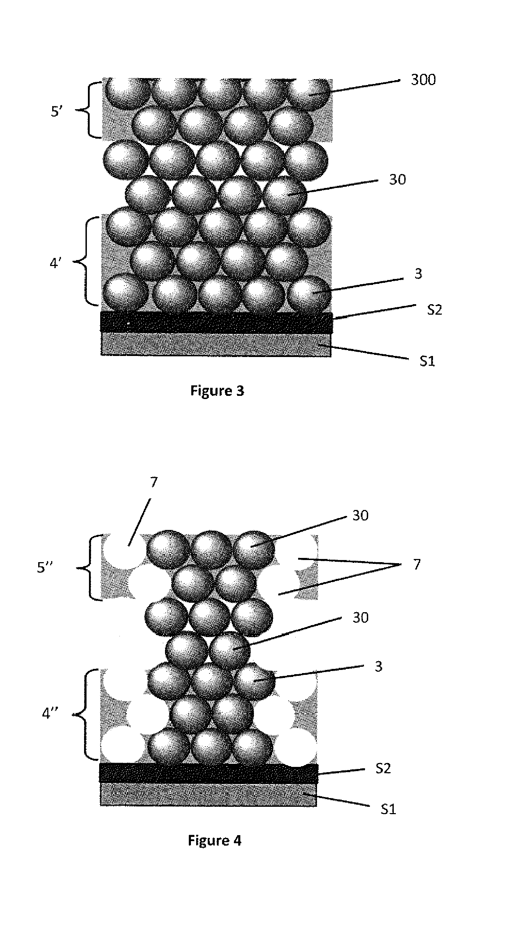

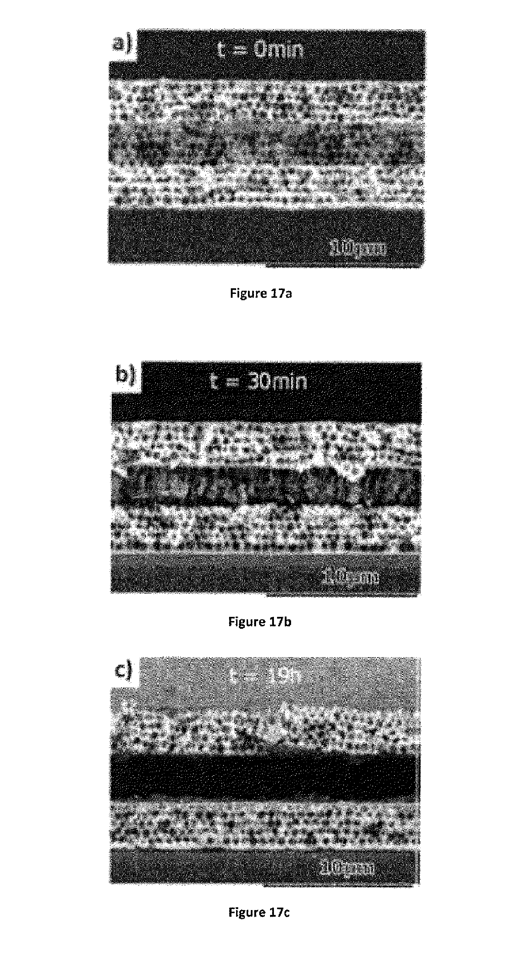

The third step (step c)) of the process of the invention is, then, as shown in figure 3, the removal of the material M₃ forming the intermediate layer 6'. This removal can be carried out by etching with an appropriate acid. When the material M₃ of the intermediate layer is Ni, a solution of nitric acid, in particular an aqueous solution containing 13% volume of nitric acid, can be advantageously used. Figures 17a-17c show the effect of the etching of a Ni layer with such a solution of nitric acid at t=0 min, 30 min and 19 h, respectively.

A solution of sulfuric acid can also be used, in particular an aqueous solution containing 24%volume H₂SO₄.

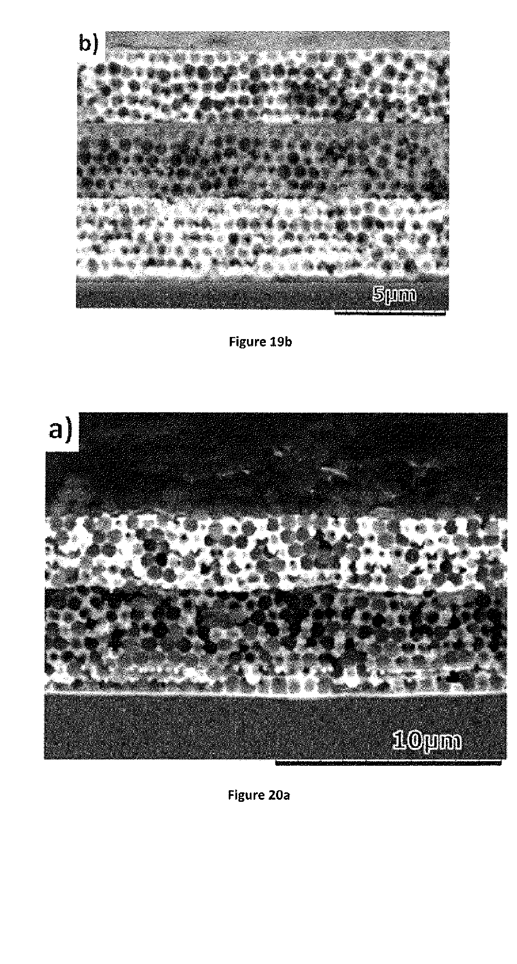

Figure 20a-20c show the effect of etching the intermediate Ni layer with such a solution at t=0 min, 30 min and 19 h, respectively.

At this step c), the obtained structure is, as shown in figure 3, constituted of
- a layer of support S1,
- a substrate S2 made of an electrically conducting material,
- a layer 4' made of a material M₁ in which colloidal particles 3 are embedded,
- a stack of colloidal particles 30, and
   finally
- a layer 5' made of a material M₂ in which colloidal particles 300 are embedded.

Then the next step (step d)) of the first embodiment of the process of the invention is the removal of the colloidal particles of the layers 4', 5'. This removal can be made by chemical dissolution, in particular by dissolution with HF when the colloidal particles are made of silica.

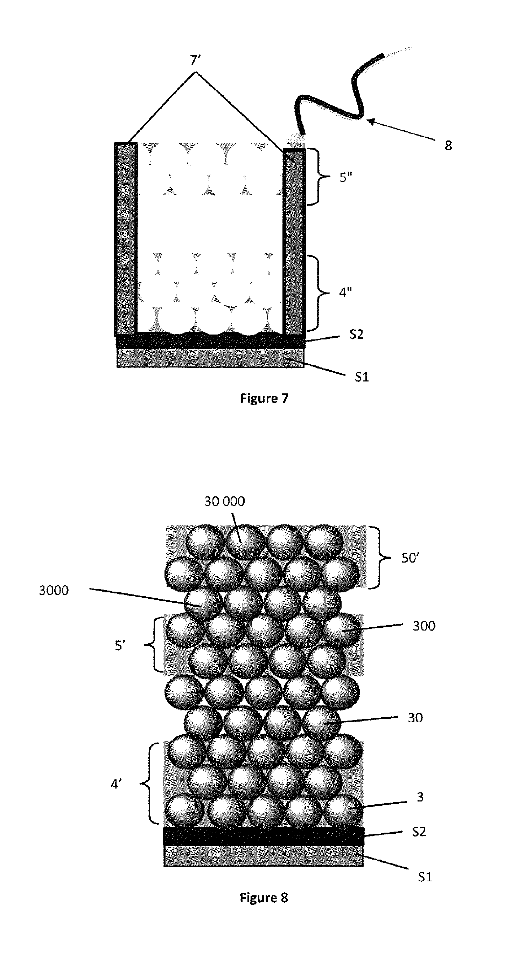

The final structure of the electrochemical cell obtained by the first embodiment of the process of the invention consists of a rigid support S1, on which a substrate S2 made of an electrically conducting material is placed, and on this substrate S2 :
- a layer of electron conducting or semi-conducting material M₁ which is now macroporous due to the removal of particles 3 and forming the first electrode 4";
- the second electrode being constituted by the layer 5" made of the material M₂, also macroporous due to the removal of particles 300 ;
   the gap between the first electrode 4" and the second electrode 5" being maintained by the layer of colloidal particles 30.
- It will clearly appear to the man skilled in the art that, while the final structure of the miniaturized electrochemical cell according to the first embodiment of the invention is made of only two electrodes, it can also be made of more electrodes, in particular of up to 19 electrodes, by creating as many new units comprising the three alternating layers, as necessary. In this case the lower layer of this (these) new unit(s) is the upper layer of the preceding unit, as shown in figure 8 where the structure of an electrochemical cell comprising three electrodes is schematically show, these three electrodes being the layer 4' from which the colloidal particles 3 have been removed, the layer 5' from which the colloidal particles 300 have been removed and the layer 50' from which the colloidal particles 30 000 have been removed.

Thus, the upper layer 5' of the three alternating layers (4', 5', 6') forming the first repeating unit becomes the lower layer of the following repeating unit of layers 5' and 50' and layer of particles 3000 as shown in figure 8.

Of course, the material filling the void spaces of the intermediate layer of the second repeating unit must have a lower potential than the material M₂ of layer 5' and thus the material filling the void spaces of the layer corresponding to layer 50' represented in figure 8.

Also, although in the figures 1-16, the substrate S2 and the support S1 are planar, according to another embodiment of the process of the invention, the substrate S2 (and when present, the support S1) may have a cylindrical shape, and the repeating units of layers are deposited around this (these) cylinder(s) thereby obtaining a coaxial configuration for the electrodes.

In the above described first embodiment of the process of the invention, the integrity of the structure and the gap between the electrodes are maintained due to the presence of remaining colloidal particles 30 and 3000 between the two electrodes. This gap is necessary to avoid short-circuits.

Another possibility for maintaining the integrity and the gap between the electrodes is represented on figures 4-7.

In this second embodiment of the process of the invention, instead of ending by the removal of the colloidal particles in layers 4', 5', 50' intended to be the electrodes of the electrochemical cell, represented in figure 3 as in the first embodiment of the process of the invention, a further step c'1), of removal of some colloidal particles 3, 30, 300, 3 000, 30 000 forming empty columns, noted 7 in figure 4, is carried out after step c).

For example, when the colloidal particles are made of silica, droplets of HF are put on the surface of the upper layer, where columns 7 are to be created and a partial dissolution of the colloidal particles is obtained with spatial selectivity.

When the colloidal particles are made of polystyrene, a solvent such as acetone is used in place of HF.

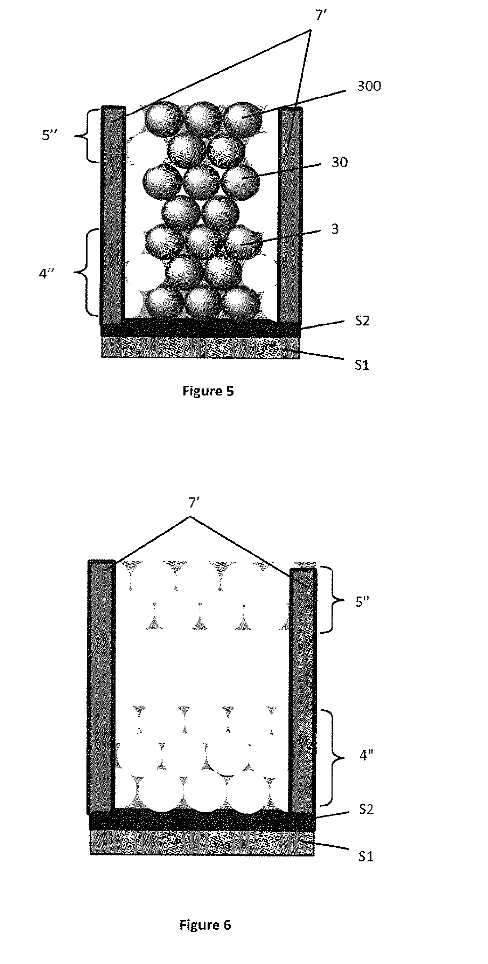

Then, as schematically represented in figure 5, in a step c'2), the empty columns 7 (starting from the surface of the removal of upper layer 5' down to the substrate S2), are filled with an electrically insulating material, forming columns 7'.

This electrically insulating material can be any electrically insulating material. But, because it has to be infiltrated in the column 7, preferably it is a material which is liquid or fluid at ambient temperature and that then hardens or a material which can be deposited by CVD or ALD.

Such supporting columns are noted 7' in figure 5.

Then, as shown in figure 6 in a step (d'1) which can be carried out before or after or during step d), the colloidal particles 30 are removed.

In the obtained electrochemical cell, short circuits are avoided thanks to columns 7'.

In all the embodiment of the process of the invention, then, the electrodes are provided with a wire, noted 8 in figure 7, and the final structure of the electrochemical cell according to the second embodiment of the invention, as shown in figure 7 is constituted of the support S1 covered on one of its surface of the substrate S2, itself covered with the first electrode 4" and above this electrode 4" and separated from this electrode 4", an electrode 5", the gap between the electrodes 4" and 5" being maintained by the columns 7'. The wire 8 is intended to connect the upper electrode of the electrochemical cell to a device.

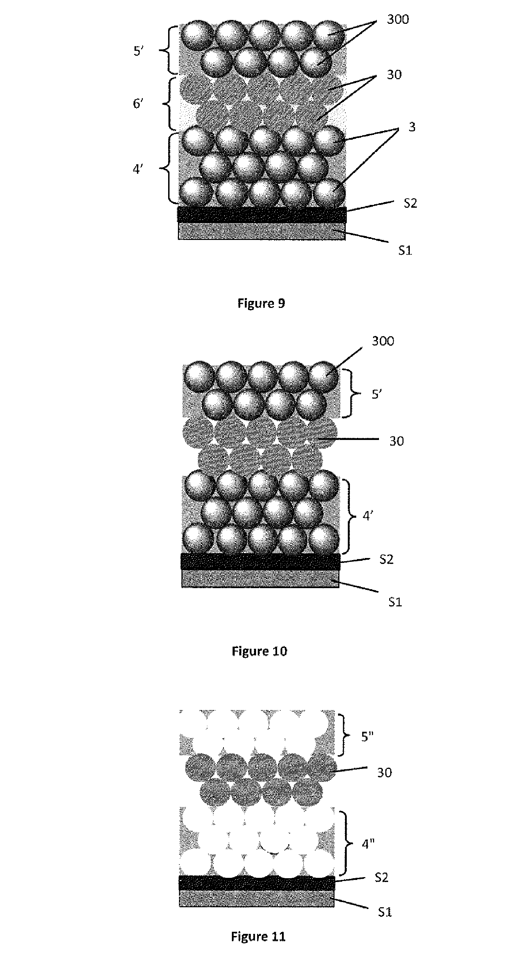

A third embodiment of the process of the invention is schematically shown in figures 9-12.

In this embodiment, the gap between two electrodes is maintained by forming a porous intermediate layer between the two electrodes (*i.e* without colloidal particles).

More precisely, the first step of the third embodiment of the process of the invention is the same as for the other embodiments of the process of the invention, except that the colloidal particles 30 in the intermediate layer must be made of a material different from the material of colloidal particles 3, 300 of the upper and lower layers.

The material of the colloidal particles 30 of the intermediate layer must be an electrically insulating material such as, for example, polystyrene when the colloidal particles 3 and 300, are made of silica or conversely.

In the second step, step b), of the third embodiment of the process of the invention, the structure which is obtained is, as shown in figure 9, constituted of the support S1, the substrate S2, the lower layer 4' in which colloidal particles 3 are embedded, layer 4' which is covered with a layer 6' in which colloidal particles 30 made of a material different from the colloidal particles 3, are embedded, this layer 6' being covered with the upper layer 5' in which colloidal particles 300, also made of a material different from the colloidal particles 30 of the intermediate layer 6' are embedded.

Then, still as in the first embodiment of the process of the invention, the material filling the void spaces of the intermediate layer is removed.

One obtains the structure shown in figure 10 constituted of the support S1, covered with the substrate S2, itself covered with the lower layer 4' in which colloidal particles 3 are embedded covered with the colloidal particles 30, themselves covered with the upper layer 5' in which colloidal particles 300 are embedded.

Then, the colloidal particles 3 and 300 are removed from layers 4' and 5'.

The obtained structure is constituted, as shown in figure 11, of the support S1 covered with the substrate S2, covered with a porous layer 4", covered with the colloidal particles 30, themselves covered with the upper porous layer 5".

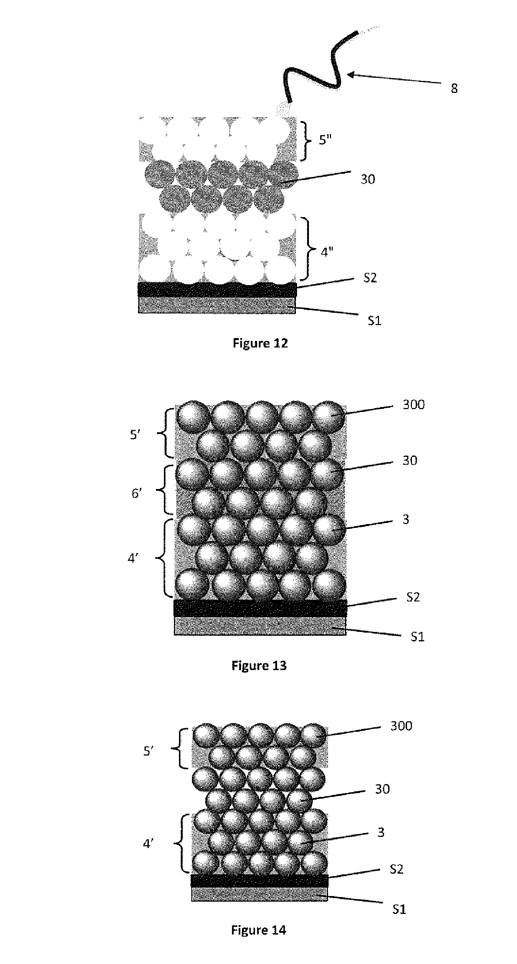

The electrochemical cell obtained by the third embodiment of the process of the invention is represented in figure 12.

As shown in figure 12, a connecting wire 8 is linked to the upper electrode and the structure of the electrochemical cell is constituted of the support S1, the substrate S2, the porous layer 4", the colloidal particles 30, the upper porous layer 5" and the wire 8 for addressing the electrodes.

In a fourth embodiment of the process of the invention, the gap between the upper layer and the lower layer is maintained by a porous intermediate layer and not by colloidal particles as in the first and third embodiments of the invention.

This fourth embodiment of the process of the invention is schematically shown in figures 13-16.

In this fourth embodiment of the process of the invention, the first step is the same as for the first, second and third embodiments: a template made of colloidal particles is formed on a substrate S2, this substrate S2 being optionally on a rigid support S1.

Then, as shown in figure 13, the void spaces between the colloidal particles 3, 30, 300 are filled with materials M₁, M₂ and M₃ as defined for the other embodiments of the process of the invention.

Then, as shown in figure 14 in a step c), the material M₃ of the intermediate layer 6' is removed.

The structure which is obtained is, as shown in figure 14, constituted of the support S1, the substrate S2, the first lower layer 4' in which colloidal particles 3 are embedded, covered with the colloidal particles 30, themselves covered with the upper layer 5' in which colloidal particles 300 are embedded.

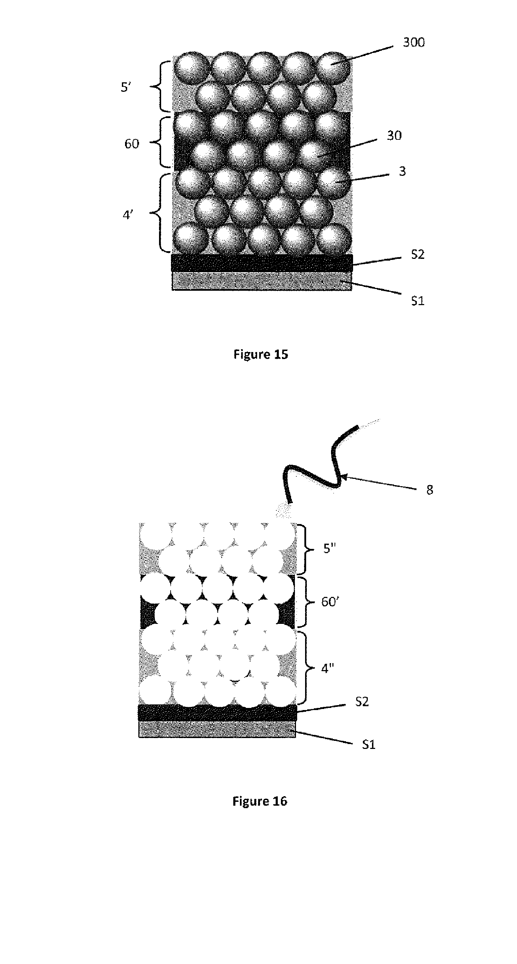

Then, as shown in figure 15, in a step c1) the void spaces created in step d1) between the colloidal particles 30, are filled with an electrically insulating material such as TiO₂.

At this step, the structure which is obtained is constituted of the support S1, the substrate S2, the lower layer 4' in which the colloidal particles 3 are embedded, a layer, noted 60 in figure 15, in which colloidal particles 30 are embedded, this layer 60 being covered with the layer 5' in which colloidal particles 300 are embedded.

Then, as shown in figure 16, in a step d1), which is carried out after step e1) and before or during or after step d), the colloidal particles 30 are removed. The electrodes are then addressed by means of a wire noted 8.

This fourth embodiment is advantageous because it enables to selectively remove particles 3, 30 and 300.

Thus, in the fourth embodiment of the invention, the final structure of the electrochemical cell is, as represented in figure 16, constituted of the support S1, covered with the substrate S2, itself covered with the macroporous layer 4" separated by the macroporous layer 60' from the macroporous upper layer 5".

In all the embodiments of the process of the invention, a further step of functionalization of the electrodes of the obtained electrochemical cell may be carried out.

In order to have the invention better understood, examples of the best mode of carrying out the process of the invention are now given for illustrative and non limitative purposes.

### Example 1: Manufacture of coaxial macroporous gold electrodes

### 1. Preparation of the samples

Gold microwire (d= 250 µm) has been cut into 3 cm long pieces that are straightened by slight rolling in between two microscope glass slides.

### 2. Cleaning and hydrophilisation of the samples

In order to clean and hydrophilize the samples, the obtained gold microwires can be immersed into a Piranha solution two times for 10 minutes or exposed to UV-ozone or O₂ plasma.

The used Piranha solution was prepared by mixing concentrated sulphuric acid (ω=98%) with concentrated Hydrogen peroxide (ω=30%) in volumetric ratio 75% v/v-25% v/v respectively.

After the cleaning step, the samples were thoroughly rinsed with MilliQ water (purified water) and dried with compressed air.

### 3. Synthesis and covalent modification of silica particles Silica particles have been synthesized using a Stöber-like (W. Stöber, A. Fink, E. Bohn, "controlled growth of monodisperse silica spheres in the micron size range ", J. Colloid Interface Sci. 1968 , 26 , 62) procedure based on the hydrolysis of tetraethylorthosilicate (TEOS) in a basic solution and polycondensation of the formed silicate acid.

The synthesized silica particles have been covalently functionalized using coupling reaction with 3-aminopropyltriethoxysilane (APTES).

### 3.1. Synthesis of silica particles

The synthesis of silica beads has been performed as a one step synthesis at room temperature by controlled adding of TEOS-absolute ethanol mixture (synthesis mixture), using a single-syringe pump system, into a three-necked flask that contained absolute ethanol and ammonia. This flash was equipped with a stirring system and a condenser.

The synthesis conditions are listed below:

| | **Value** |
|---|---|
| **Synthesis mixture:** | |
| Vol (TEOS) | 50 ml |
| Vol (abs. ethanol) | 50 ml |

| **Hydrolyzing solution:** | |
|---|---|
| Vol (ammonia, 25% in water) | 40 ml |
| Vol (abs. ethanol) | 400 ml |
| Speed of the addition of synthesis solution | 8 ml/h |
| Time duration of addition of syntesis solution | 12h30min |
| Speed of mixing | 300 rpm |
| Final diameter of synthesized silica particles | 585 nm |

### 3.2. Covalent functionalization of silica particles

The silica particles were hydrophobized through a surface covalent modification with APTES. APTES was added into the original post synthetic mixture that contains silica particles. Mixture was stirred over night and heated next day at 80 °C for 1h to ensure good covalent binding of APTES.

The amount of added APTES was 10 times larger than the calculated value in order to ensure good surface coverage of the silica beads.

Calculation of the sufficient amount of APTES (given below) is based on the geometrical consideration that 2 APTES molecules cover 1 nm² of the surface of silica nanoparticles and that density of the silica nanoparticles is 2.2 g/cm³.

Calculation of necessary volume of APTES:
p (density of silica) = 2.2 g/cm³
r (particle radius) = 292.5 10-9 m
V (volume of a particle, m3) = 4/3r³π
m (mass of a particle, g) = V* ρ *1e6
Number of spheres per gram of silica = 1 g/m
Lateral area of one sphere (m2) = 4r²π

Surface area per gram of silica spheres (m2)= Area of one sphere * Number of spheres per gram of silica.

Number of APTES molecules = Surface area per gram of silica spheres (nm²) *2 molecules:
n (moles) = N/Na (Na : Avogadro number)
V(APTES) = n*M(APTES) / p(APTES)

### 3.3. Purification of covalently modified silica particles

The functionalized silica beads were purified by rinsing with MilliQ water 10 times. Each rinsing cycle is followed by centrifugation in order to separate supernatant from the bulk.

Additionally, beads were purified using dialysis against the MilliQ water.

### 3.4. Fabrication of colloidal-crystal template (step a) of the process of the invention).

Colloidal crystal template has been prepared using Langmuir-Blodgett technique based on self assembly of covalently functionalized silica nanoparticles.

### 3.5. Cleaning of silica particles

Silica particles (d=585 nm), used for the formation of the Langmuir film, were previously sonicated for 10 minutes in order to avoid the aggregation, washed 5 times with an absolute ethanol and centrifuged each time to separate supernatant from nanoparticle deposit.

Between two consecutive washing steps, silica particles were sonicated for a few minutes in order to enhance the washing procedure and spread them out into the bulk.

### 3.6. Resuspension of silica particles

After completion of washing procedure, silica particles were redispersed into the ethanol-chloroform mixture (20% v/v-80% v/v respectively). The same solvents were added in different portions followed by 5 mins. of sonication in between.

Freshly prepared suspension of silica particles were immediately used for the compression of Langmuir film.

### 3.7. Preparation of Langmuir and Langmuir-Blodgett films

The compression of a monolayer of particles has been carried out on an apparatus LB through apparatus from (NIMA^{®}, type: 622).

The Teflon-coated surface of the apparatus as well as the surface of the moveable barriers were cleaned with dichloromethane.

The apparatus was filled with MilliQ water and the dust contaminations were sucked out through water pump. Suspension of silica particles was added onto the precleaned water surface drop by drop with an interval of a few seconds.

A glass slide holding several pieces of cleaned gold microwires was attached to the dipping mechanism of the LB through.

Experimental parameters are given in the table below:

| **Parameter** | **Value** |
|---|---|
| Targeted surface tension for the Langmuir film | Usually around 6 mN/m |
| Upstroke Speed | 1 mm/min |
| Downstroke Speed | 63 mm/min (maximum speed) |
| Maximum barrier speed | 14.5 cm²/min |
| Programmed number of layers | 15 |

### 4. Manufacture of coaxial cylindrical macroporous gold electrodes

Fabrication of coaxial macroporous gold electrodes with cylindrical geometry could be summarized in three different steps (figures 1-4):
- Electrodeposition of alternating metal layers (step b)),
- Etching of the intermediate metal layer with nitric acid (step c)),
- Stabilisation of the structure and prevention of short circuits (steps c'1) and c'2)),
- Electrochemical characterisation of the structure,

A copper foil was used to allow electrical connection of the sample with a Potentiostat in order to carry out step b).

Before the electrodeposition step, the very end of the colloidal-crystal covered wire was covered with a small drop of nail varnish to ensure a good quality of the chronoamperometric curves.

### 4.1. Electrodeposition of alternating metal layers (step b)).

Electrodeposition of alternating gold-nickel-gold (Au-Ni-Au) metal layers throughout the colloidal-crystal template consisting of 585 nm silica particles have been performed successively using commercially available electroplating solutions (ECF63 from Metalor for gold, Semibright nickel solution from AlfaAesar).

The electrodeposition was performed at a constant electrode potential using chronoamperometry.

For the electrodeposition of metal layers, a three electrode system consisting of a working electrode (colloidal crystal template on gold microwire), a reference electrode (sat. Ag/AgCl) and a counter electrode (Pt foil with a cylindrical shape) has been used.
• **Electrodeposition of gold**
   E = -0.66 V vs sat. Ag/AgCl
• **Electrodeposition of nickel**
   E = - 0.85 V vs sat. Ag/AgCl

The length of the colloidal-crystal template immersed into the electroplating solution was dependent of the quality of the template along the wire.

For the precise positioning of the sample inside the electrochemical cell, a micropositioner has been used.

### 4.2. Etching of the nickel layer (step c)

The sandwiched nickel layer was etched with 30% nitric acid for 20 hours at ambient temperature and additional heating at 50 °C for one hour.

Figure 5 shows SEM images showing the progression of the etching of the nickel layer, after immersion in nitric acid.

In the next step, samples were washed with MilliQ water to remove the dissolved nickel and nitric acid. Gold remains after the etching process.

### 4.3. Stabilisation of the coaxial structure (step c'1 and c'2)).

Stabilization of the coaxial structure and prevention of short circuit between the two porous coaxial gold layers has been achieved by dissolving locally every 5mm along the gold wire the silica beads with a small drop of 5% hydrofluoric acid. After rinsing with water and drying, small drops of nail varnish commercialized by the Company D'DONNA under the commercial denomination "Classic nail polish" and reference 14625, diluted with absolute acetone (1:1) are deposited on each of these etched spots, allowing the varnish to penetrate the upper porous gold layer and the free space between the two gold layers.

In addition, the structure is dried with a hot air stream to prevent lateral diffusion of the diluted nail varnish and clogging of the channel between two electrodes.

This procedure was repeated twice to ensure the good space separation between the two independent macroporous gold electrodes.

### 4.4. Dissolution of silica beads (step d)

The remaining silica particles are then removed from the composite metal-silica structure by etching the samples with 5% hydrofluoric acid for 10 min.

In the following step, the samples are dipped few times in the MilliQ water for removing the HF solution that could remain into the structure.

The samples were dried between 20 and 25°C and used for electrochemical characterization.

### 4.5. Electrochemical characterization

Final confirmation of the existence and stability of a coaxial macroporous system with two independently addressable electrodes was obtained by cyclic voltammetry (CV).

CV record was performed using three electrode systems: a working electrode (coaxial sample), a reference electrode (sat. Ag/AgCl) and a counter electrode (Pt cylinder).

Experimental conditions are given in the table below:

| **Parameter** | **Value** |
|---|---|
| Scan rate | 100 mV/s |
| Potential window | 0V to 1.6V |
| Supporting electrolyte | 0.1M sulphuric acid |
| Deaeration of the electrolyte | Solution was purged with an pure argon for 10 min |

The charge that corresponds to the characteristic cathodic (stripping peak) peak of gold oxide obtained from the cyclic voltammograms (see figure 10) is directly proportional to the active surface of the electrode and could be used to calculate it.

Once the formation of short circuits is successfully avoided, the calculated charges are different when the two independent coaxial porous electrodes are connected separately. When connecting the two coaxial porous electrodes together, a cumulative charge for both electrodes is obtained.

In order to connect two macroporous coaxial electrodes to the system separately, an external electrical connection (wire 8) was established by gluing a thin gold wire (d=100 µm) with a conductive silver paint to the surface of the outer porous gold electrode while the inner porous electrode is in a direct contact with the bare gold wire used for the fabrication of colloidal-crystal template.

Electrode potential was cycled few times during the experiment until the current reaches constant value.

During the measurement, the sample was fixed at the constant position by using a micropositioning system.

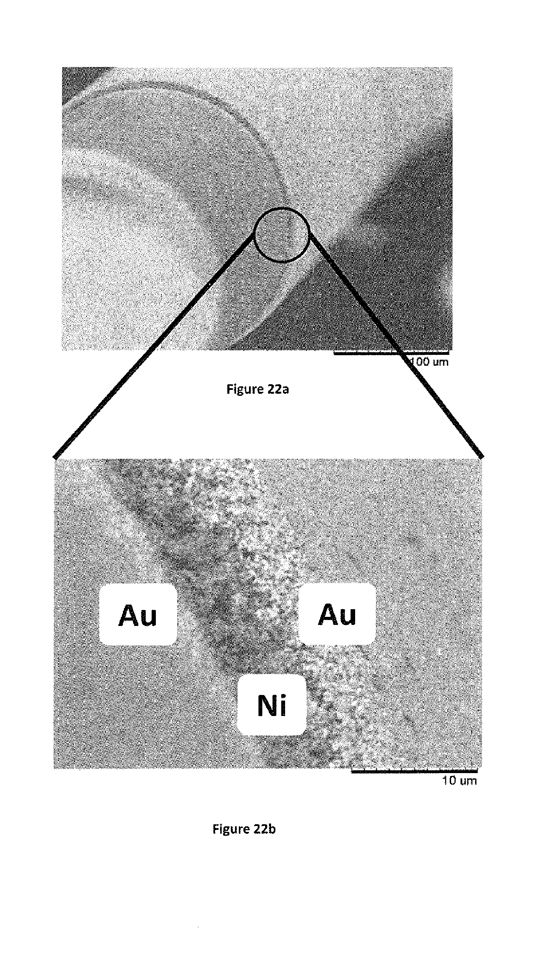

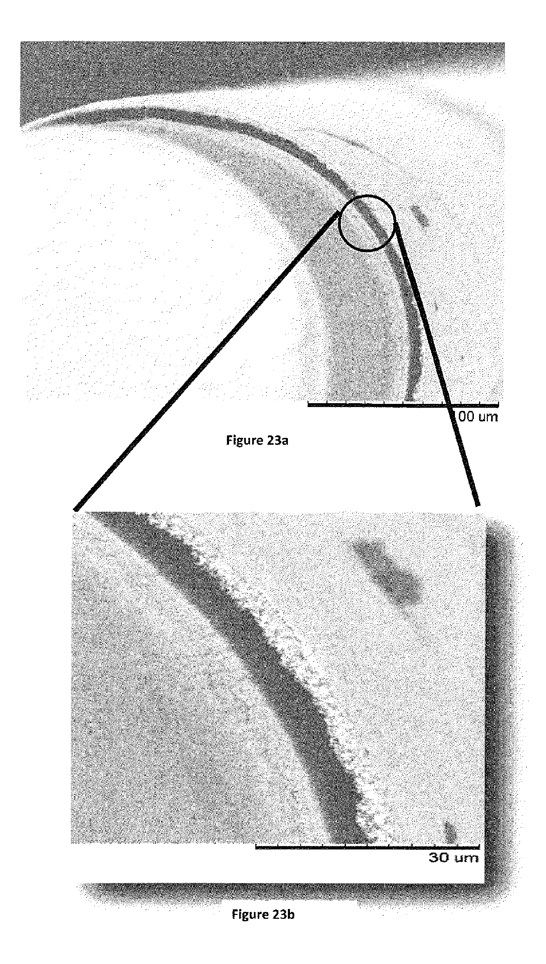

Figure 22a-23b show SEM images of the alternating metal layers and subsequent dissolution of the colloidal particles of the template. Each macroporous metal stack extended to about 4 pore layers and the thickness (3 µm) of the individual stacks was found homogeneous over the whole cross section of the sample. A gold/nickel/gold film deposited on another 250µm wire is shown in figures 22a and 22b and figures 23a and 23b obtained from a colloidal template composed of 20 layers of 690 nm colloidal particles of silica. In both figures, either before (figures 22a and 22b) or after (figures 23a and 23b) dissolution of the colloidal particles, the gold films can be clearly discriminated and show a homogeneous thickness of 3 µm. By dissolving the intermediate nickel layer it is possible to address independently either the top or the bottom gold electrode in these coaxial macroprous microwire electrodes.

### Example 2: Manufacture of a flat electrode configuration

We proceeded as in the example 1 except that the colloidal template was formed on a flat support a commercially available gold-coated glass slide.

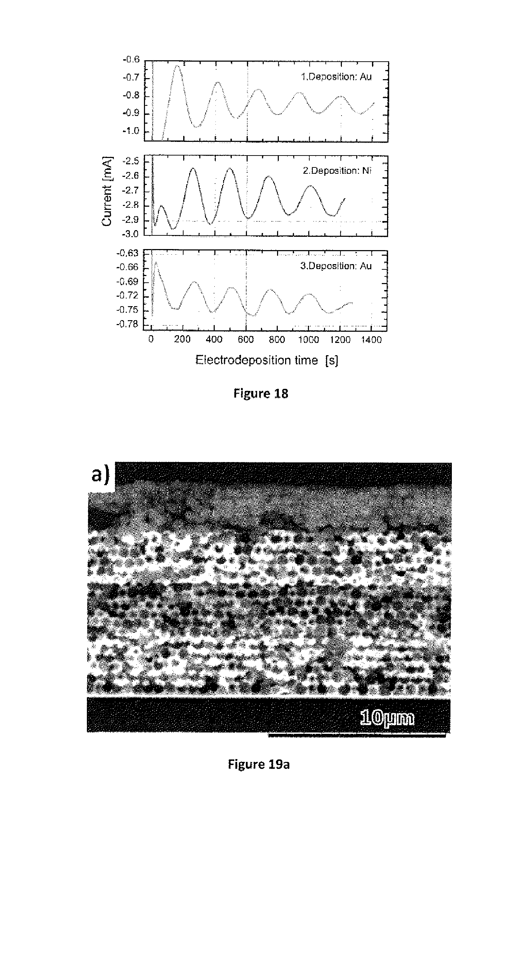

Figure 18 shows three chronoamperometric curves obtained for the consecutive depositions of the first porous gold layer, the intermediate nickel porous nickel layer and the top porous gold layer into a colloidal template. The latter was composed of 20 sphere layers (diameter 600nm) which have been transferred on a planar gold coated glass slide by the Langmuir-Blodgett (LB) technique. As shown in the different curves, current oscillations not only for the first gold deposition, but also during the second and third depositions of nickel and gold in the colloidal template, respectively can be observed. Such a result already indicates that for both, the gold and the nickel deposition, the respective growth front proceeds uniformly in a well organized colloidal template structure. It also enabled to perfectly control the thickness of each metal stack, allowing to choose independently the dimension of the bottom- and the top-layer electrode as well as their respective separation in the final cell. In the example shown in Figuresl9a and 19b, about five bead layers of the template were infiltrated for each metal stack corresponding to ~3µm thick films (the first gold film being slightly thicker). As for the potentiostatic deposition of a single material in the colloidal template, the amplitude of the oscillations decreases in the course of the infiltration (note the different current scales in the different plots).

After electrodeposition, the sample was broken and its cross-section has been characterized using SEM. Figure 19a) demonstrates that the expected number of layers in the template has been filled with gold and nickel films. Nickel is less conductive than gold allowing to discriminate both metals in the SEM images. As shown in Figure 19b), where the colloidal template has been removed by etching, the different metal stacks are extremely well defined and their thickness was uniform over the whole sample area covering almost 1cm². A remarkably flat surface is found for macroporous metal layers at the interface between the individual stacks.

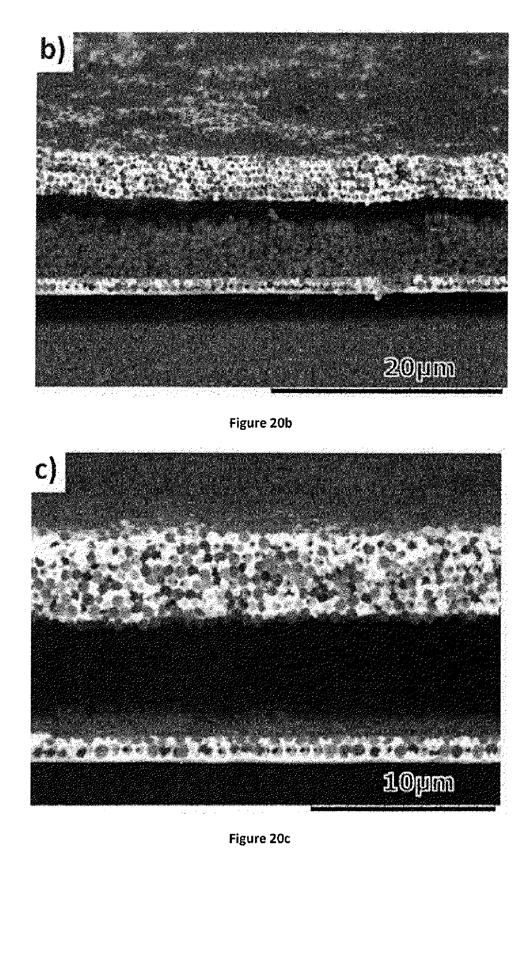

In the next step the intermediate nickel layer was dissolved in an acidic solution. In this step, the sample shown in figure 19b) was exposed to sulfuric acid solution (24%) and the progressive dissolution of the nickel layer was documented by SEM images that were taken after different immersion times in the acidic solution (see figures 20a-20c). By comparing figures 20a) and b), the nickel layer is found partly dissolved after 30 minutes in the solution. After seven hours (not shown here) nickel was still present but its porous structure had completely vanished. After a period of 19 hours in the etching solution (figure 20c), the nickel layer had been entirely dissolved so that a structure composed of two macroporous gold films separated by an air gap is obtained. In order to stabilize the structure, a thin line at the sides of the sample (all except the cross section) had been infiltrated with varnish before nickel dissolution.

### Exemple 3: Manufacture of a flat electrode configuration.

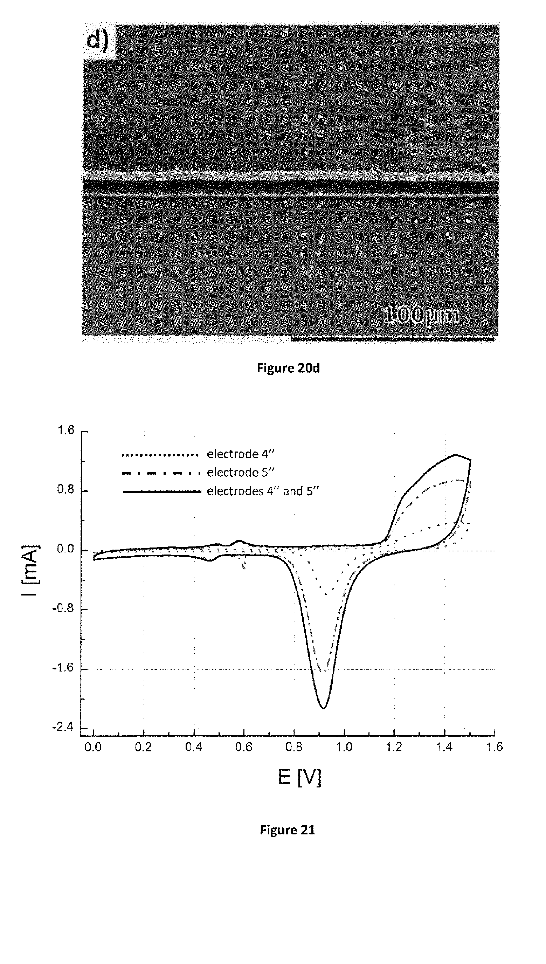

In order to further improve the mechanical stability of the two porous gold layers and to completely prevent an eventual collapse a slightly modified procedure can also be followed. After having deposited the two layers of gold (upper and lower layers) and the intermediate layer of nickel, instead of eliminating the colloidal template, the colloidal template was left in the sample during the nickel dissolution allowing to further stabilize the structure. Figures 19a or 20a shows the cross section of a sample with a (Au-Ni-Au) multilayer structure deposited in a colloidal template. In this case, we took advantage of the current oscillations to produce macroporous gold films with different thickness (3/2 layers for the bottom gold film and 5 layers for the top one), which serve as top and bottom electrode in the final device. An electrical contact was established to the top gold film before dissolving the nickel layer. As shown in figures 20c)-20d) the nickel had been completely dissolved and it was found that the two gold film electrodes were well separated over the whole length of the sample cross section (see figure 20d). In some areas the colloidal template was still existent (figure 20b) whereas in others, it had been eliminated by the solution (figures 20c and d).

In order to confirm the absence of any short-circuit between the two macroporous film electrodes their active surface area had been determined using the CV stripping signal of gold. In the case of a short-circuited sample, the surface area detected by the CVs should be the same for the bottom electrode (electrode 4") and the top electrode (electrode 5"). As shown in figure 21, the top electrode (electrode 5") showed higher oxidation and reduction peaks than the bottom electrode (electrode 4"), indicating that the active surface area of the top electrode is significantly higher than that of the bottom electrode and that no electrical connection exists between both electrodes. In a control experiment we connected both electrodes 4" and 5" simultaneously as working electrodes and measured the CV signal. In this case we observed the highest peak intensities. By calculating the active surface area from the charge associated with the gold oxide reduction peak we found values of 2.0 , 6.2 and 8.82 cm² for electrode 4", electrode 5" and both electrodes connected together, respectively. Addition of the surface areas calculated for electrode 4" and 5" equals approximately the value measured for both electrodes. Keeping in mind that the inaccuracy of the surface determination by the reduction of an oxide monolayer is in the range of ± 10%, the determined values demonstrate that both electrodes 4" and 5" are not interconnected and thus are independently addressable.

### Exemple 4: Manufacture of a flat electrode configuration.

We proceeded as in example 2 but the colloidal template was eliminated only every 5 millimeters along the whole cross-section of the structure and then a varnish was introduced, as in example 1, in the gaps left by this elimination.

The final structure was stable and the absence of short-circuit was confirmed.

## Claims

1. A method for manufacturing a miniaturized electrochemical cell consisting of porous electrodes, the method comprising the following steps:
a) formation of a colloidal template (10) of colloidal particles (3, 30, 300, 3 000, 30 000) made of an electrically insulating material, on a substrate (S2) made of an electrically conducting material,
b) depositing by electrodeposition in the void spaces (4, 5, 6), of the colloidal template, at least three alternating layers (4', 6', 5', 50') forming a repeating unit, these three alternating layers (4', 6', 5', 50') being made of an electron conducting material or of a semi-conducting material, the intermediate layer(s) (6') being made of a material M₃ different from the materials M₁ and M₂ constituting respectively the upper and lower layers (4', 5') and being the materials wanted for the electrodes, the material M₃ having a standard potential lower than the standard potentials of the materials M₁ and M₂,
c) removal of the material M₃ of intermediate layer(s) (6'), and
d) removal of the colloidal particles (3, 300) of the upper and lower layers (4', 5', 50') thereby obtaining the desired electrodes (4", 5", 50").

2. The method of claim 1 further comprising following step e):
e) providing the electrochemical cell obtained in step a) with a connecting wire (8) made of an electrically conducting material.

3. The method according to claim 1 or 2, in which the substrate (S2) has a cylindrical shape and step a) of formation of the colloidal template (10) is carried out around this cylinder, thereby obtaining a coaxial configuration for the electrodes (4", 5", 50").

4. The method according to claim 1, in which the substrate (S2) is a flat substrate thereby obtaining a flat configuration of the electrodes (4", 5").

5. The method of anyone of the preceding claims, wherein the substrate (S2) is placed on a rigid support (S1).

6. The method of anyone of the preceding claims, wherein, in step b), up to 9 repeating units (4', 6', 5') are deposited, the upper layer (5, 50') of each repeating unit forming the lower layer of the following repeating unit and being covered by an intermediate layer (6').

7. The method according to anyone of the preceding claims, further comprising:
- before step d) of removal of the colloidal particles (3, 300, 30 000) of the upper and lower layers (4', 5', 50') of each repeating unit and after step c) of removal of the intermediate layer (6'), a step c1) of filling the void spaces obtained in step c) in the intermediate layer (6'), with a non electrically conducting material,
and
- after step c1) and before and/or after and/or during step d), a step dl) of removal of the colloidal particles (30, 3000) of the intermediate layer (6').

8. The method according to anyone of claims 1-6, further comprising: after step c) of removal of the material M₃ of the intermediate layer (6') and before step d) of removal of the colloidal particles (3, 300, 30 000) of the upper and lower layers (4', 5', 50'), the following steps:
- c'1) chemical dissolution of columns (7) of colloidal particles (3, 30, 300, 3 000, 30 000) from the surface of the template (10) down to the substrate (S2),
- c'2) filling the columns (7) obtained in step c) with a non electrically conducting material,
and
- after step c'2) and before and/or after and/or during step d), a step d'1) of removal of the colloidal particles (30, 3000) of the intermediate layer (6').

9. The method according to anyone of the preceding claims, wherein the substrate (S2) is made of a material chosen among Au, Ag, vitreous C, Pt, and Indium Tin oxide (ITO).

10. The method according to anyone of the preceding claims, wherein the materials M₁, M₂ and M₃ are, independently from each other, chosen among Pd, Ag, Cr, Au, Pt, Cu, Ni, Zn, polypyrrole (PPy), polyaniline (PAni), polyacetylene, polythiophene, poly(3,4-ethylenedioxythiophene): sodium poly(styrene sulfonate) (PEDOT-PSS).

11. The method according to anyone of the preceding claims, wherein the support (S1) is made of a material chosen among a glass and a plastic.

12. The method according to anyone of the preceding claims, wherein the particles (3, 30, 300, 3 000, 30 000) have a spherical shape and are independently from each other made of a material chosen among SiO₂ and an electrically insulating polymer, preferably polystyrene.

13. The method according to anyone of the preceding claims, wherein the particles (3, 30, 300, 3 000, 30 000) have a diameter of from 20-2000 nm, preferably a diameter of from 100 to 1 200 nm.

14. The method of anyone of the preceding claims, wherein step c) is carried out by electrochemical dissolution.

15. The method of anyone of the preceding claims, wherein, in step a), the formation of the colloidal template (10) is carried out by the Langmuir-Blodgett deposition method, or electrophoretic deposition, or a combination of both.

16. The method of anyone of the preceding claims, wherein each layers (4, 5, 6), independently from each other, has a thickness comprised between 0 excluded and 1.00µm included.

17. The method of anyone of claims 4-16, wherein the substrate (S2) and the support (S1) have, independently from each other, a surface comprised between 1 mm² and 100 cm².

18. The method of anyone of claims 3 and 5-16, wherein the substrate (S2) and the support (S1) have, independently from each other, a diameter comprised between 5 µm and 10 mm.
